# EUROPEAN PATENT APPLICATION

(11) **EP 0 901 747 A1**
(43) Date of publication of application: **17.03.1999**
(21) Application number: 98203037.1
(22) Date of filing: 10.09.1998
(51) Int. Cl.: A01B 39/14

(54) **Undercutting device**

(30) Priority: 12.09.1997 NL 1007026
(71) Applicant: Machinefabriek Steketee B.V., 4436 RE Oudelande (NL)
(72) Inventor: Steketee, Jan Jacobus, 4438 AE Driewegen (NL)
(74) Representative: Bartelds, Erik

(57) **Abstract**

The invention relates to an apparatus (1) for undercutting a crop growing in a ridge (5), comprising a displaceable frame (2) with one or more cutting members (3) which extend into the ridge (5) during use, and means (4) for supporting the ridge. The ridge support means (4) can comprise at least one support element (13) which is movably connected to the frame (2) and is to be placed into contact with the ridge (5) and which is movable, for instance pivotally, in different directions.

The undercutting apparatus can further be provided with means (14), for instance springs, for biasing the ridge support means (4) toward the ridge (5). The ridge (5) support means (4) can otherwise have a cross-sectional shape corresponding with the shape of the ridge (5).

## Description

The invention relates to an apparatus for undercutting a crop growing in a ridge, comprising a displaceable frame with at least one cutting member which extends into the ridge during use. Such an undercutting apparatus is known from NL-A-9101405.

Undercutting a crop, i.e. cutting the roots of the plant which extend downwards into the ground, is found to be a very effective manner of stopping the growth of the crop. This is of great importance for instance in the case of seed potatoes and eating potatoes. Compared with the traditional spray killing of the foliage, undercutting offers the advantage that it has no environmental impact. A drawback of undercutting is that thereby the ridge in which the crop grows is as it were deformed, whereby harvesting of the crop at a later stage is made considerably more difficult.

The invention now has for its object to provide an undercutting apparatus of the above described type wherein this problem does not occur. According to the invention this is achieved in such an apparatus by means for supporting the ridge. With these support means the shape of the ridge can be maintained during and after undercutting.

It is noted that an apparatus is known from WO-A-8801830 for loosening and slightly raising ridges in which a crop is growing, which is provided with a number of horizontal lifting members or blades and a number of vertically directed plates with which the ridges can be carried upward. This is not therefore an apparatus for restoring the ridges to their original shape.

In a preferred embodiment of the undercutting apparatus according to the invention, the ridge support means comprise at least one support element which is movably connected to the frame and is to be placed into contact with the ridge. Owing to the movable character of such a support element, the shape of the ridge can be followed in simple manner. The or each support element is advantageously movable herein in different directions.

A structurally simple embodiment is obtained when the or each support element is pivotally connected to the frame. In order to obtain a movement in different directions, the or each support element can herein be pivotable on a plurality of shafts. To make the apparatus suitable for use with different types of crop growing in ridges, at least one of the pivot shafts of the or each support element can take an adjustable form.

In order to properly preserve the original shape of the ridge, the undercutting apparatus is preferably provided with means for biasing the ridge support means toward the ridge, preferably in the form of springs.

According to a preferred embodiment of the apparatus, the ridge support means comprise per ridge at least two co-acting support elements. In this manner the freedom of movement of the support means, and therewith the possibilities of adapting these latter to the shape of the ridge, is improved still further.

For optimal retention of the shape of the ridge during the use of co-acting support elements, the support elements are preferably connected by at least one biasing spring.

Further, the ridge support means advantageously have a cross-sectional shape corresponding with the shape of the ridge, wherein in the case of co-acting support elements each one thereof will of course preferably have a cross-sectional shape corresponding with the shape of a half of the ridge. A space which is uninterrupted in the direction of displacement is herein preferably defined in the support element or between the co-acting support elements, through which space the stalks of the plants can pass and jamming of the apparatus is prevented.

The invention is now elucidated on the basis of an embodiment. Reference is herein made to the annexed drawing, in which:
figure 1 shows a perspective view of the undercutting apparatus according to the invention during use,

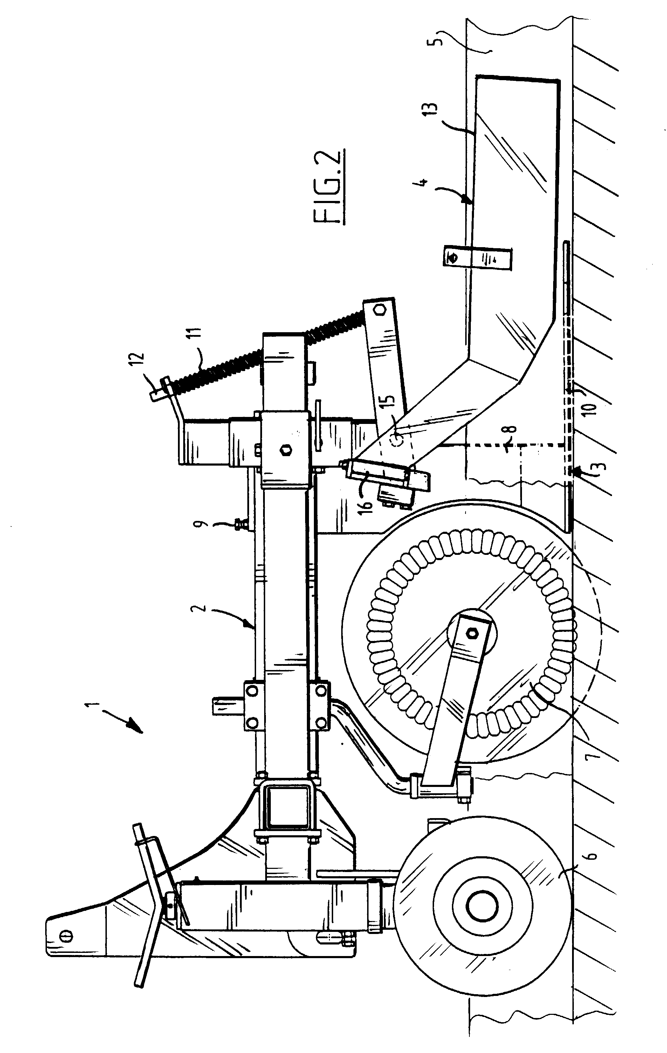

figure 2 is a side view of the apparatus along the arrow II in figure 1,

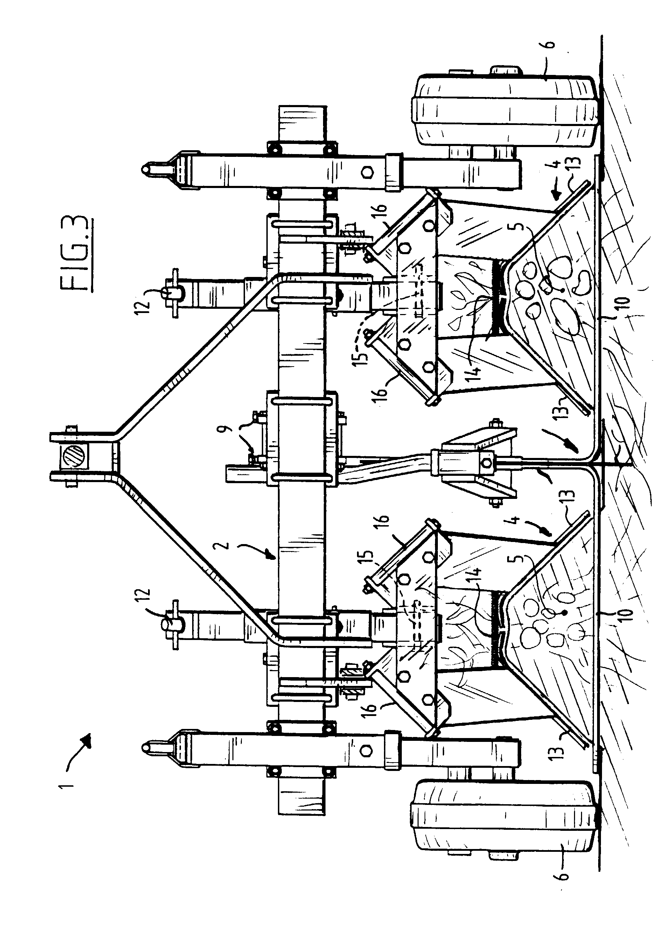

figures 3 and 4 show this apparatus in respectively a front view and a top view, and
figure 5 shows a view corresponding with figure 1 of an embodiment of the undercutting apparatus which is suitable for a large number of ridges.

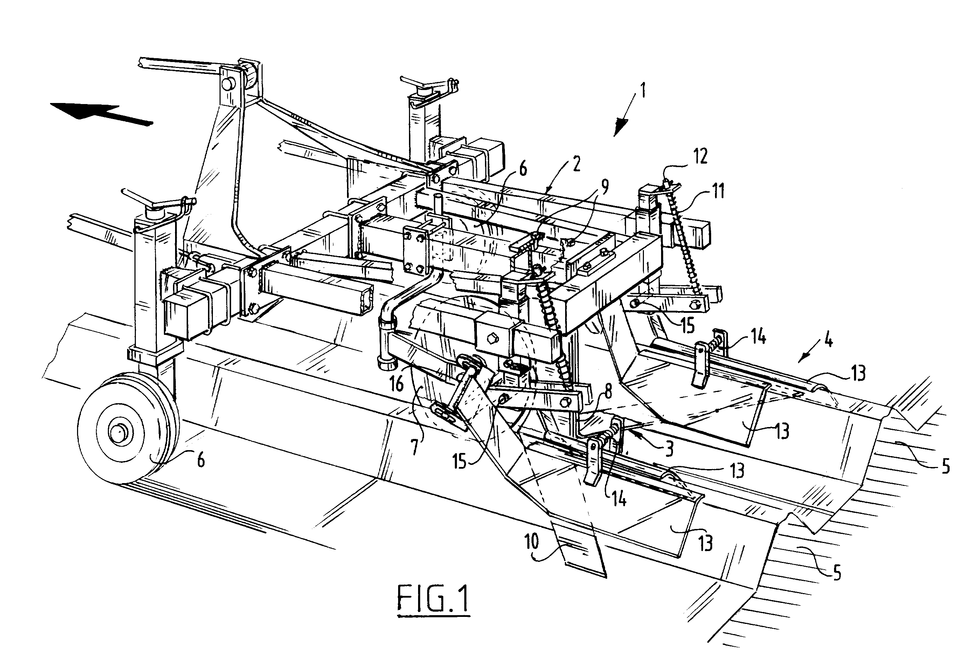

An apparatus 1 for undercutting a crop growing in ridges 5 comprises a frame 2 which is displaceable along ridges 5 in the direction of the arrow M (fig. 1). Frame 2 is formed by a front part 17 which can be connected to a tractor and a cross beam 18 connecting thereto. On either side of cross beam 18 are arranged hollow uprights 20 which are releasably fastened to beam 18 by means of straps and are therefore displaceable in transverse direction. Wheel support arms 21 are received for telescopic displacement in hollow uprights 20. Wheel support arms 21 are displaced up or downwards by means of a screw spindle 22, of which only the operating part is shown. By moving wheel support arms 21 up or downwards the wheels 6 suspended thereon are also moved up or downwards, whereby the working depth of apparatus 1 can be adjusted.

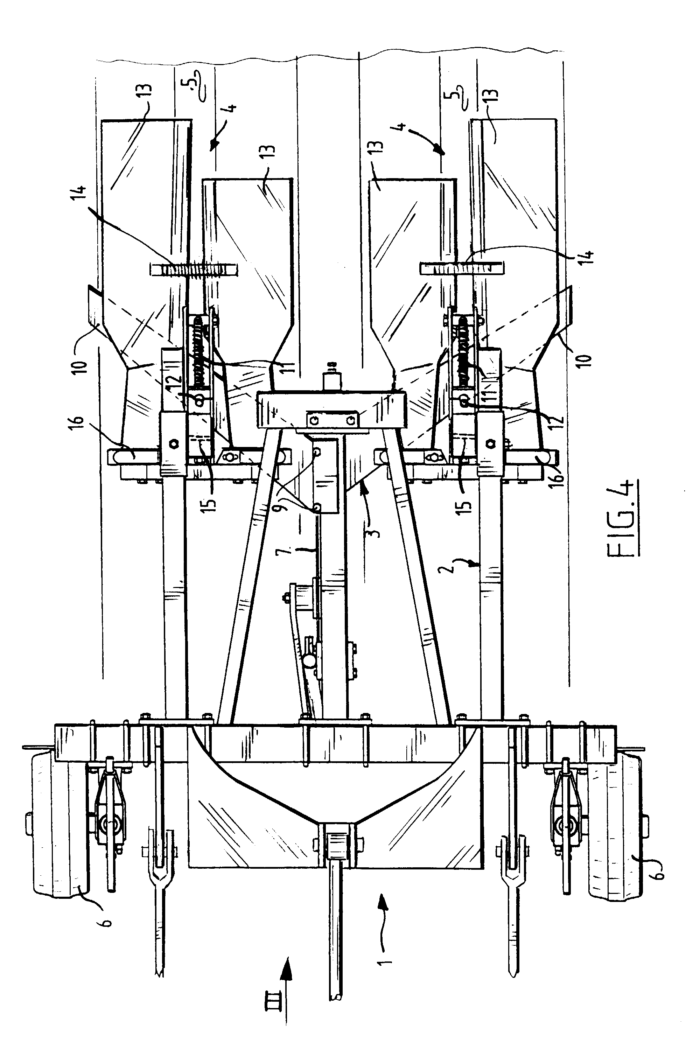

Cross beam 18 further bears a central longitudinal girder 31 which is likewise displaceable in transverse direction and on which is suspended a cutting member 3 which has two cutting blades, each extending into the two ridges 5. The cutting member or knife 3 is herein supported by a stem 8 which is fixed to longitudinal girder 31. Arranged in the shown embodiment between stem 8 and longitudinal girder 31 are two adjustment bolts 9 with which the position of cutting member 3 can be precisely adjusted. In the shown embodiment the cutting member 3 is V-shaped in top view, so that the leading edges or cutting sides 10 thereof enclose an angle α with the direction of displacement M (fig. 4).

As seen in the displacement direction M in front of cutting member 3 a bent spacing member 32 is mounted on longitudinal girder 31 for sliding in lengthwise direction and for adjustment in height direction. Fixed to the end of this spacing member is a pivotable fork 33 in which a cutting disc 7 is rotatably mounted. This cutting disc 7 serves to cut through existing foliage remnants between ridges 5. In order to prevent these foliage remnants collecting around the stem 8 of cutting member 3, the cutting disc 7 is situated as closely as possible in front of the stem. In the shown embodiment a circle segment-shaped recess is even arranged in stem 8 in which the cutting disc is partly received.

Finally, two outer longitudinal girders 19 are also fixed to cross beam 18 which are likewise adjustable in transverse direction and which bear means 4 for supporting the ridges 5. These ridge support means 4 comprise per ridge a pair of co-acting support elements 13i, 13o, which press respectively against the inner side and against the outer side of ridge 5. A continuous space 37 is left clear between support elements 13i, 13o for the stalks of the plants. Each support element 13i, 13o herein has a cross-section corresponding to half the cross-section of the ridge 5 and is connected to frame 2 for movement in different ways. For this purpose each support element 13i, 13o is pivotable on a shaft 16 which is received adjustably in a bearing block 27. This bearing block 27 is mounted on a transverse beam 28 which is in turn mounted on the front end of a pivot arm 26, which is pivotally mounted on a lying shaft 15. This pivot shaft 15 is received in the lower end of a vertically displaceable column 25 which is slidable in a sleeve 24, which is in turn mounted on a carriage 23 which is slidable along girder 19 in the direction of displacement M.

Pivot arm 26 is biased in the direction of ridge 5 by means of an adjustable compression spring 11. Spring 11 is herein arranged round a rod 12 which is slidably received in a mounting 34 on the top of column 25 and the stroke of which is bounded by a locking pin or ring 35. Rod 12 is otherwise also provided on its underside with a number of openings through which a locking pin or ring can be placed (not shown here). By placing the locking pin or ring into a higher or lower opening, the stroke length available for spring 11 can thus be decreased or increased and the spring pressure thus adjusted therewith.

Support elements 13i, 13o are each further provided with a spacing member 29 between which an adjustable tension spring 14 is arranged. Support elements 13i, 13o are hereby thus biased towards each other. Each outer support element 13o is here also slightly longer than the associated inner support element 13i, whereby support elements 13i, 13o are as it were staggered. This in view of the V-shape of cutting member 3, whereby the cutting edge 10 at the position on the outer side of each ridge 5 remains a little behind the cutting edge 10 at the position on the inner side. If preferred from the point of view of production technique, support elements 13i, 13o could also be embodied equally long (and thereby interchangeably). The length would then of course be determined by the requirement that the outer side of ridge 5 must have sufficient support during working with a V-shaped cutting member 3.

As stated, the pivot shaft 16 of each of the support elements 13i, 13o is adjustable. For this purpose each bearing block 27 is provided with slotted holes 30 in which the outer ends of pivot shaft 16 are received. By adjusting the angle of pivot shaft 16 the direction in which the associated support element 13i, 13o presses on ridge 5 is also adjusted. Each support element 13i, 13o is thus individually pivotable on its associated adjustable pivot shaft 16 and, in addition, the support elements can swivel pairwise on shaft 15. Finally, support elements 13i, 13o are also adjustable pairwise in height direction and in the displacement direction by means of slidable column 25 and carriage 23. An optimal adjustability of support elements 13i, 13o is therefore obtained In this manner.

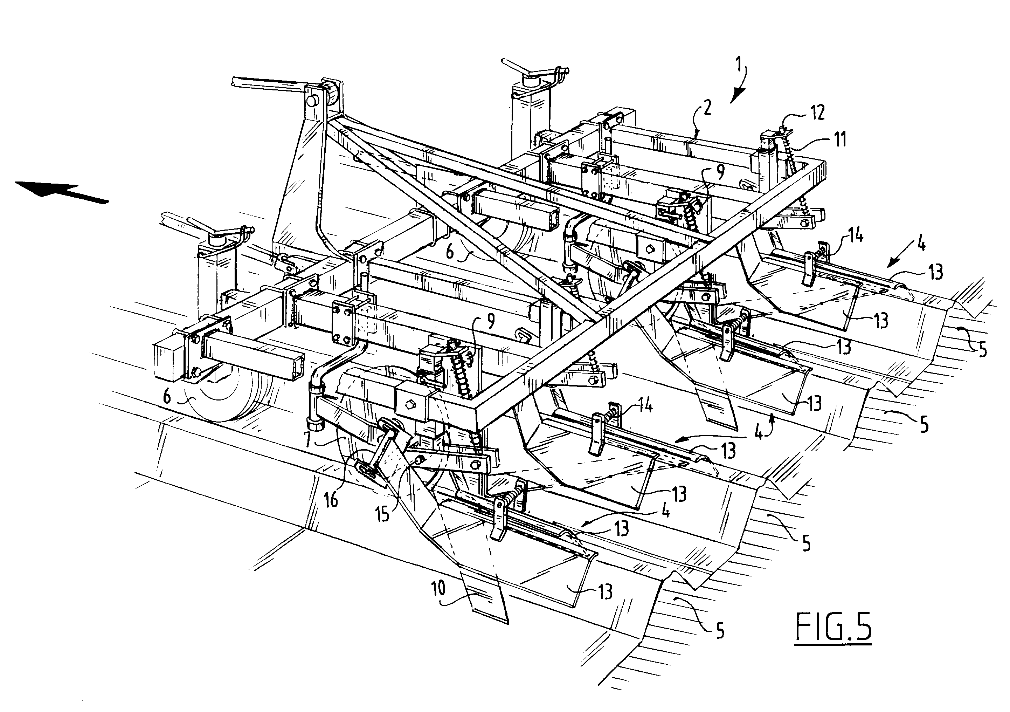

Instead of an apparatus for undercutting two rows of crop, wider or, conversely, narrower apparatus can also be envisaged. An example of a wider apparatus which is suitable for working four rows is shown in fig. 5. The construction hereof is otherwise substantially identical to that of the apparatus for two rows, be it that in this wider embodiment the different longitudinal girders 19, 31 are further connected at the rear by a transversely extending strengthening beam 36, while in this embodiment wheels 6 are not placed on the ends of cross beam 18 but slightly to the inside in front of cutting disc 7 and cutting member 3.

Although the embodiment is elucidated above with reference to a number of embodiments, it will be apparent that it is not limited thereto. The support elements, which take a plate-like form in the described embodiments, could for instance also take the form of two pressure rollers, each rotatable on an inclining shaft. The rotation shafts of the rollers would herein have to run parallel to the sides of the crop ridges. Depending on the desired shape of the sides of the crop ridges, the rollers could have a cylindrical, a slightly convex or a slightly concave shape. The adjustment possibilities of the support elements embodied as rollers can further be the same as those of the plate-like support elements of the foregoing embodiments.

The ridge support means could also consist of more or fewer than two co-acting support elements. The support elements could also be movable in a manner other than by means of the shown hinges. The adjustability in lengthwise direction and in height direction could also be achieved differently than shown here. The scope of the invention is therefore defined solely by the appended claims.

## Claims

1. Apparatus (1) for undercutting a crop growing in a ridge (5), comprising a displaceable frame (2) with at least one cutting member (3) which extends into the ridge (5) during use, **characterized by** means (4) for supporting the ridge (5).

2. Undercutting apparatus (1) as claimed in claim 1, **characterized in that** the ridge support means (4) comprise at least one support element (13) which is movably connected to the frame (2) and is to be placed into contact with the ridge (5).

3. Undercutting apparatus (1) as claimed in claim 2, **characterized in that** the or each support element (13) is movable in different directions.

4. Undercutting apparatus (1) as claimed in claim 2, **characterized in that** the or each support element (13) is pivotally connected to the frame (2).

5. Undercutting apparatus (1) as claimed in claims 3 and 4, **characterized in that** the or each support element (13) is pivotable on a plurality of shafts (15, 16).

6. Undercutting apparatus (1) as claimed in claim 5, **characterized in that** at least one of the pivot shafts (15, 16) of the or each support element (13) is adjustable.

7. Undercutting apparatus (1) as claimed in any of the foregoing claims, **characterized by** means (14) for biasing the ridge support means (4) toward the ridge (5).

8. Undercutting apparatus (1) as claimed in claim 7, **characterized in that** the biasing means (14) comprise springs.

9. Undercutting apparatus (1) as claimed in any of the foregoing claims, **characterized in that** the ridge support means (4) comprise per ridge (5) at least two co-acting support elements (13i, 13o).

10. Undercutting apparatus (1) as claimed in claims 8 and 9, **characterized in that** the co-acting support elements (13i, 13o) are connected by at least one biasing spring (14).

11. Undercutting apparatus (1) as claimed in any of the foregoing claims, **characterized in that** the ridge support means (4) have a cross-sectional shape corresponding with the shape of the ridge (5).

12. Undercutting apparatus (1) as claimed in claims 10 and 11, **characterized in that** each of the co-acting support elements (13i, 13o) has a cross-sectional shape corresponding with the shape of a half of the ridge (5).

13. Undercutting apparatus as claimed in any of the foregoing claims, **characterized in that** a space (37) which is uninterrupted in the direction of displacement (M) is defined in the support element or between the co-acting support elements (13i, 13o).
